# EUROPEAN PATENT SPECIFICATION

(11) **EP 3 743 008 B1**
(45) Date of publication and mention of the grant of the patent: **28.06.2023**
(21) Application number: 18766116.0
(22) Date of filing: 17.08.2018
(51) Int. Cl.: A61C 5/35, A61C 13/30

(54) **FASTENING ELEMENT AND SYSTEM FOR INTRODUCTION IN THE TOOTH CANAL AND USE OF THE FASTENING ELEMENT FOR INTRODUCTION IN THE TOOTH CANAL**
BEFESTIGUNGSELEMENT UND SYSTEM ZUM EINBRINGEN IN DEN ZAHNKANAL UND VERWENDUNG DES BEFESTIGUNGSELEMENTS ZUM EINBRINGEN IN DEN ZAHNKANAL
ÉLÉMENT DE FIXATION ET SYSTÈME POUR INTRODUCTION DANS LE CANAL DENTAIRE ET UTILISATION DE L'ÉLÉMENT DE FIXATION POUR INTRODUCTION DANS LE CANAL DENTAIRE

(30) Priority: 25.01.2018 BR 102018001658
(43) Date of publication of application: 02.12.2020
(73) Proprietor: Angelus Industria De Produtos Odontologicos S/A, 86031-218 Londrina - PR (BR)
(72) Inventor: ALCÂNTARA, Roberto Queiróz Martins, 86031-218 Londrina - PR (BR)
(74) Representative: Maiwald GmbH
(86) International application number: PCT/BR2018/050292
(87) International publication number: WO 2019/144206

(56) References cited:
- WO-A1-2014/097131
- WO-A2-92/03103
- JP-A- 2009 118 914
- TW-A- 201 635 982
- US-A1- 2005 123 881

## Description

### FIELD OF THE INVENTION

The present invention relates to the field of odontology. More precisely, the present invention relates to a fastening element and system for introduction in teeth canals to be treated being used alone or together with a prefabricated intra-radicular pin serving as a root and / or anchor reinforcement of prostheses to be installed on the tooth.

### BACKGROUND OF THE INVENTION

Pins used in teeth after canal treatment for root and / or anchor reinforcement of prostheses to be installed on the teeth are normally produced by two methods.

The first method being directly on the root, where the dentist uses a resin to produce a pin that copies the entire shape and internal diameter of the canal (individualized), the pin obtained by the dentist is sent to the laboratory to be fused in metal by the lost wax casting process.

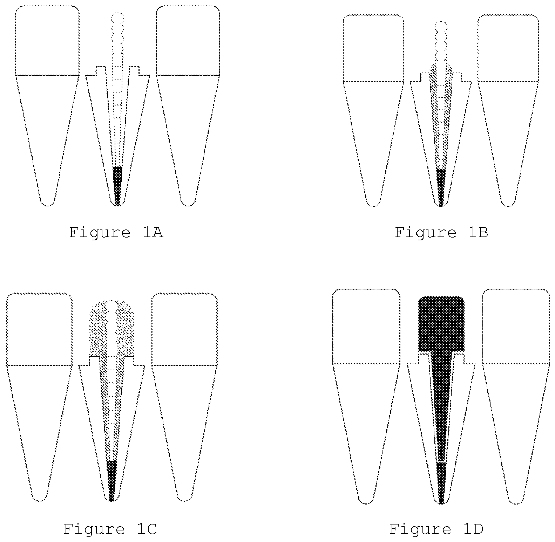

Figure 1A shows the introduction of a plastic pin of the prior art. In Figure 1B is demonstrated a filling of the canal with resin. In Figure 1C is observed the filling of the upper part of the canal with resin and in Figure 1D the final shape after the sculpture with the use of drills is provided. The final part of Fig 1D is removed from the tooth and sent to the laboratory that melts the plastic into a metal part.

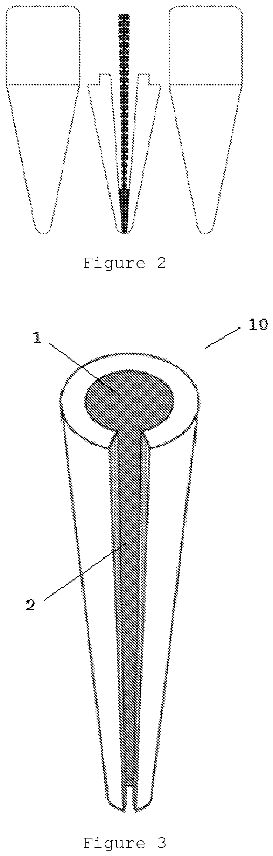

The second method is the use of prefabricated pins in metal, glass or carbon fibers, as shown in Figure 2.

Prefabricated pins in glass or carbon fibers have the advantage of not being subjected to corrosion like the metallic ones, thus, not leading to their early loss, besides not causing metallic taste in the patient's mouth. In addition, the prefabricated pins have a modulus of elasticity (flexibility) of 18 GPa, similar to that of the dentin in the crown's portion, which is about 20 GPa and in the root's portion, which is 9 to 10 GPa. This flexibility of the pins in fibers minimizes root fracture risks where they are installed, because in the case of an excessive force they undergo a flexion absorbing the shocks not transferring to the dental root.

In cases of excessive force on the metal pins, because they do not undergo flexion as the fiber pins transfer them to the tooth causing fractures in the roots and, therefore, loss of the dental element.

In addition, prefabricated pins can be manufactured in the white color, allowing the professional to make prostheses more aesthetic, therefore, more accepted by the patient.

However, while said pins are prefabricated with diameters close to those of the canals prepared to receive them, they have the disadvantage of not being perfectly adapted to any size and diameter of the canal. As a result of this partial adaptation, the prefabricated pins in glass or carbon fibers lose part of their retentive capacity, being able to move from the root after their cementation in the canal. This displacement can cause loss of the prosthesis performed on this pin by the dentist.

In this sense, several proposals were submitted with the intention of solving the lack of a good adaptation of the prefabricated pins to the canal of the tooth causing low mechanical overlapping and, therefore, low retentivity of the prefabricated pins.

European patent EP 1 925 269, in the name of HARALD E. NORDIN and Peter NORDIN, and entitled "Tooth root canal anchorage assembly" reports a hollow structure to be positioned above the root, i.e., on the prefabricated pin already installed, and thus has the sole function of providing a supra-structure on the prefabricated pin to support the future prosthesis.

European patent EP 1 925 269 differs from the present invention, whose fastening element is installed together with the pin internally of the canal, since, it is intended to provide greater retentivity thereto within the canals.

U.S. Patent 5,816,816 in the name of JONATHAN SCHARF and entitled "Method of producing fiber reinforced dental post and resulting dental post" reports a process for making a pin to be installed in the tooth canal, aiming at supporting the future prosthesis to be installed on the same. It uses a braided fiber rope closed in its lower portion that should receive a hollow mandrel and, in the sequence, positioned inside the canal. Thereafter, a needle is adapted into the hollow mandrel and resin is injected at the same time as the mandrel is removed from the canal. The hollow rope set now filled with resin is transformed in a pin to support the future prosthesis.

Although the system of U.S. Patent No. 5,816,816 has a rope-shaped hollow fastening element to be filled by resin, it has no similarity with the present invention, the purpose of which is to provide a higher retentivity of a pin to be installed together with the same. It is important to note that the pin obtained by U.S. Patent 5,816,816 will behave only as a conventional pin already known from the prior art, differing only in the manufacturing process.

European patent EP 0809475, in the name of REYNAUD MARC and REYNAUD PIERRE LUC, entitled "Self-locking Dental Post" reports a process for obtaining a pin to be positioned within the canal to support the future prosthesis to be positioned over the same. The process of said patent comprises a rigid element in its central part and an uncured material on the outside that, when positioned inside the canal, molds to the walls thereof, and is then cured to remain fixed within the canal. The final result of this process will be a conventional pin differing from the state of the art only by the manufacturing process.

The present invention differs from the European patent EP 0809475 in that it contains elements that, when installed with the conventional pins available, will promote its mechanical overlapping within the canal by providing it with retentivity in canals of the various diameters where it will be installed.

European patent EP 0576510, published on January 5, 1994, in the name of LARS HANSSON, and, entitled: "A root canal pin" reports a pin to be installed in the tooth canal containing a longitudinal and central slit being opened in the bottom of the pin to be fitted at the end of the root and a column at its top part to facilitate support of the future prosthesis. While the pin of said patent has a slot similar to the present invention, the function of which is to be closed causing greater retention of the pin at its end portion, the pin thereof does not contain all of the elements and features in accordance with the present invention.

US Patent 4,622,012 published on November 11, 1986 in the name of LEWIS S. SMOLER, entitled: "Dental post system" reports a two-pins system to support the future prosthesis. The first pin of tubular shape is positioned in the canal to receive a resinous material injected in its interior with function of filling this tube and cementing the same. Then, a second pin is inserted therethrough in its tubular portion, forcing the excess cement to return to the top part of the same. Unlike the present invention, although it contains tubular elements, the system of patent US 4,622,012 has as sole function of receiving the cement, forcing it against the walls of the canal and providing a good distribution of the same, ensuring a good adhesion of the same to the canal, but it does not contain all the elements and features of the present invention.

U.S. Patent 5,326,263 published on July 5, 1994 in the name of BERNARD WEISSMAN, entitled "Light-curable tooth reinforcement" reports the introduction of a flexible pin into the canal which will then be filled with an uncured resin that will occupy the empty spaces between the pin and the walls of the canal. Thereafter, it is performed a partial cure of the resin, removal of the canal assembly and final cure. As a result, a pin is formed conforming to the canal structures. U.S. Patent 5,326,263 differs from the present invention in that it does not contain elements that cause expansion of the pin in its side parts to promote mechanical overlapping thereof and, hence, its greater retentivity. Some other examples may be found in US 2005/123881 A1, WO 2014/097131 A1 and WO 92/03103 A2

Thus, as can be seen, none of the above-mentioned documents proposes a fastening element for insertion in the tooth canal comprising a body of parallel or conical shape; a parallel or tapered longitudinal through hole; a main longitudinal slit running through the entire length of the securing member; partial longitudinal slits in the lower and / or upper part of the body of the fastening element, the fastening element being fitted through its bore in a prefabricated pin, and wherein the fastening element will fill the void spaces of the canal left by the pin, thereby providing greater clamping and mechanical retention of the fastening element and pin assembly (fastening system) inserted into the canal.

In addition, the configuration of the fastening element for insertion in the tooth canal proposed in the present invention allows that said fastening element be positioned alone or together with the pin pre-installed within the tooth canal containing several internal diameters and different conicity, that is, the fastening element conforms to any size of canal mechanically juxtaposing (overlapping) to the walls of the same.

### SUMMARY OF THE INVENTION

In order to solve the above-mentioned problems, the present invention will provide significant advantages with respect to the fastening elements for introduction in the tooth canal.

The present invention is defined in claims 1 and 10. Further embodiments are set out in the appended dependent claims.

It is an object of the present invention to provide a fastening element for introduction in the tooth canal comprising:
- a body of parallel or conical shape;
- a parallel or tapered longitudinal through bore; and
- a main longitudinal slit running from the upper end to the lower end of the body of the fastening element.

Said fastening element positioned alone or with the pin serves as a tooth reinforcement with the treated canal and as anchorage for prostheses which have supported (will be supported) on the treated teeth.

The configuration of the fastening element for introduction in the tooth canal proposed in the present invention allows said fastening element to be positioned alone or together with the intra-radicular pin within the tooth canal containing several different internal diameters and conicities, i.e., the fastening element adapts to any canal size by mechanically juxtaposing the walls of the same.

Thus, after cementation, the fastening element of the present invention provides a high retention of the fastening system within the canal, minimizing detachment risks by being used as a base for anchoring prostheses.

It is a further object of the present invention to provide a fastening system for introduction in the tooth canal comprising the fastening element of the present invention and a prefabricated pin; whereby the fastening element with its through-bore is inserted into the prefabricated pin.

In addition, an embodiment, which is not a part of the present invention relates to the use of the fastening element for introduction in the tooth canal.

### BRIEF DESCRIPTION OF THE DRAWINGS

The structure and operation of the present invention together with further advantages thereof may be better understood with reference to the accompanying drawings and the following description:
Figure 1A shows the introduction of a plastic pin in the state of the art;
Figure 1B shows the filling of the resin canal made in the prior art;
Figure 1C shows the filling of the top part of the canal with resin made in the prior art;
Figure 1D shows the final shape after the sculpture with the use of drills that occurs in the prior art;
Figure 2 shows a configuration of a prefabricated pin introduced in the tooth canal that occurs in the prior art;
Figure 3 shows a preferred embodiment of the fastening element for introduction in the tooth canal of the present invention;
Figures 4.1 and 4.2 show an alternative embodiment of the fastening element for introduction in the tooth canal of the present invention.
Figure 5.1 shows the fastening system of the present invention, wherein the tooth canal is arranged for insertion of the pin.
Figure 5.2 shows the fastening system of the present invention, wherein the pin is positioned in the canal.
Figure 5.3 shows the fastening system of the present invention, wherein the fastening element is adapted in the pin.

### DETAILED DESCRIPTION OF THE INVENTION

Although the present invention may be susceptible to different embodiments, it is shown in the drawings and in the following detailed discussion, a preferred embodiment and an alternate embodiment with the understanding that said embodiments are to be considered exemplifications of the principles of the invention and not limitations of the present invention.

As shown by Figure 3 of the present disclosure, in a preferred embodiment, the present invention discloses a fastening element (10) for introduction in the tooth canal (11) comprising:
- a body of parallel or conical shape;
- a parallel or tapered longitudinal through bore (1);
- a main longitudinal slot (2) running from the upper end to the lower end of the body of the fastening element.

In an alternative embodiment, the fastening element (20) for introduction in the tooth canal (11) of the present invention comprises:
- a body of parallel or conical shape;
- a parallel or tapered longitudinal through bore (3); and
- a main longitudinal slot (4) extending from the upper end to the lower end of the body of the fastening element;
- partial longitudinal slits (5, 6) in the lower and / or upper part,

wherein said partial longitudinal slits (5, 6) are parallel with said main longitudinal slit (3); and
wherein the partial longitudinal slits (5, 6) leave one end of the body of the securing element partially advancing its extension.

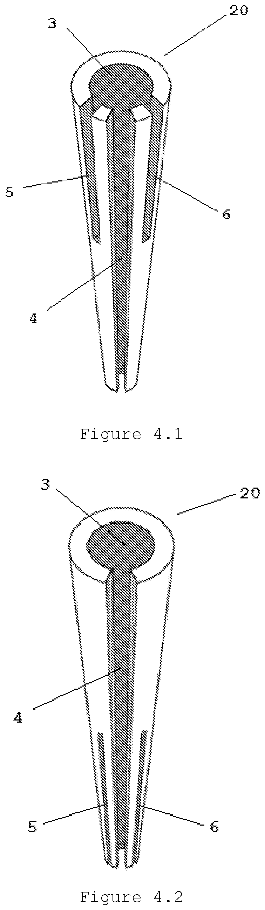

Figures 4.1 and 4.2 show said alternative embodiment of the fastening element (20) of the present disclosure.

The material of the fastening element (10, 20) may be a fiber reinforced composite comprising a polymer matrix and fibers dispersed in the polymer matrix in the single or multidirectional direction.

The fibers of the reinforced composite for manufacturing the fastening element (10, 20) are fibers selected from the following group: glass, quartz, carbon, polyamide and mixtures thereof, being preferably glass fiber and quartz.

In addition, the polymer matrix of the reinforced composite for manufacturing the fastening element (10, 20) is selected from the group comprising polyamides, polyesters, polyolefins, polyimides, polyacrylates, polyurethanes, vinyl esters, epoxy-based materials, such as epoxy resin, styrene, styrene acrylonitrile, ABS polymers, polysulfones, polyacetals, polycarbonates, polyphenylene sulfides, acrylic monomers, methacrylic monomers and mixtures thereof, preferably epoxy resin.

The reinforced composite is the union of a fiber and a polymer matrix; the polymer matrix being preferably the epoxy resin.

Said reinforced composite of the fastening element (10, 20) contains radiopacifier and pigments dispersed in the polymer matrix, one or more elements of the group comprising silica, calcium phosphate, barium sulfate, alumina, zirconia, tin oxide, oxide of tantalum, niobium oxide, titanium oxide, poly (methacrylate) and mixtures thereof.

The fastening element (10, 20) for introduction in the tooth canal of the present invention has a flexural strength in the range of 300 to 1200 Mpa.

The fastening element (10, 20) according to the present invention will be fixed tangentially to the inner wall of the root canal (11) by means of chemical cements used in odontology.

Further, the body of the fastening element (10, 20) is rigid or flexible.

In addition, the present invention describes a fastening system (8) for introduction into the tooth canal (11) comprising the fastening element (10, 20) defined in the present invention and a prefabricated pin (9), and the fastening element (10, 20) with its through bore (1,3) is inserted into the prefabricated pin (9).

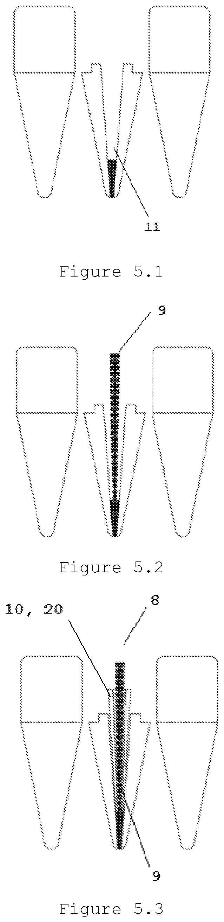

Figures 5.1, 5.2 and 5.3 show the fastening system of the present invention.

Further, an embodiment, which is not a part of the present invention describes the use of the fastening element (10, 20) defined in the present invention, wherein said fastening element (10, 20) is to be introduced in the root canal (11) of the tooth, the fastening element (10, 20) being used alone or together with a prefabricated pin (9) for strengthening the root and / or anchoring of prostheses to be installed on the tooth.

It is also necessary to understand that the drawings are not necessarily in scale, but that they are only of a conceptual nature. The invention is therefore to be limited, as indicated by the scope of the appended claims.

## Claims

1. A fastening system for introduction in the tooth canal (8), comprising:
- a fastening element (10) for introduction in the tooth canal (11) comprising a body of parallel or conical shape, a parallel or tapered longitudinal through bore (1) and a main longitudinal slot (2) running from the upper end to the lower end of the body of the fastening element; and **characterized in that** the fastening system further comprises
- a prefabricated pin (9),
wherein the fastening element (10) with its through bore (1) is insertable around the prefabricated pin (9).

2. The fastening system (8), according to claim 1, **characterized in that** the material of the fastening element (10) is a fiber-reinforced composite comprising a polymer matrix and fibers dispersed in the polymer matrix in the single direction or multidirectional.

3. The fastening system (8), according to claim 2, **characterized in that** said reinforced composite comprises radiopacifier and pigments dispersed in the polymer matrix, the radio-opacifier and the pigments being selected from the group comprising: silica, phosphate calcium oxide, barium sulfate, alumina, zirconia, tin oxide, tantalum oxide, niobium oxide, titanium oxide, poly (methacrylate) and mixtures thereof.

4. The fastening system (8), according to claim 2, **characterized in that** said polymer matrix of the reinforced composite is selected from the group comprising polyamides, polyesters, polyolefins, polyimides, polyacrylates, polyurethanes, vinyl esters, epoxy-based materials, such as epoxy resin, styrene, styrene acrylonitrile, ABS polymers, polysulfones, polyacetals, polycarbonates, polyphenylene sulfides, acrylic monomers, methacrylic monomers and mixtures thereof.

5. The fastening system (8), according to claim 4, **characterized in that** said polymer matrix is preferably epoxy resin.

6. The fastening system (8), according to claim 2, **characterized in that** the fibers of the reinforced composite are fibers selected from the group comprising glass, quartz, carbon, polyamide and mixtures thereof.

7. The fastening system (8), according to claim 6, **characterized in that** said fiber is preferably glass fiber or quartz.

8. The fastening system (8), according to claim 1, **characterized in that** the fastening element (10) comprises a flexural strength in the range of 300 to 1200 MPa.

9. The fastening system (8), according to claims 1 to 8, **characterized in that** the fastening element (10) is fixable tangentially to the inner wall of the root canal (11) by means of chemical cements.

10. A fastening system for introduction in the tooth canal (8), comprising:
- a fastening element (20) for introduction in the tooth canal (11) comprising a body of parallel or conical shape, a parallel or tapered longitudinal through hole (3), a main longitudinal slit (4) and partial longitudinal slots (5, 6) in the upper and/or lower part of the body of the fastening element (20), wherein said partial longitudinal slots (5, 6) are parallel with said main longitudinal slit (4) and wherein the partial longitudinal slots (5, 6) leave one end of the body of the fastening element partially advancing its extension; and
**characterized in that** the fastening system further comprises
- a prefabricated pin (9),
wherein the fastening element (20) with its through bore (3) is insertable around the prefabricated pin (9).

11. The fastening system (8), according to claim 10, **characterized in that** the material of the fastening element (20) is a fiber reinforced composite comprising a polymer matrix and fibers dispersed in the polymer matrix in the single or multidirectional direction.

12. The fastening system (8), according to claim 11, **characterized in that** said reinforced composite comprises radiopacifier and pigments dispersed in the polymer matrix, the radiopacifier and the pigments being selected from the group comprising: silica, phosphate calcium oxide, barium sulfate, alumina, zirconia, tin oxide, tantalum oxide, niobium oxide, titanium oxide, poly (methacrylate) and mixtures thereof.

13. The fastening system (8), according to claim 11, **characterized in that** said polymer matrix of the reinforced composite is selected from the group comprising polyamides, polyesters, polyolefins, polyimides, polyacrylates, polyurethanes, vinyl esters, epoxy-based materials, such as epoxy resin, styrene, styrene, acrylonitrile, ABS polymers, polysulfones, polyacetals, polycarbonates, polyphenylene sulfides, acrylic monomers, methacrylic monomers and mixtures thereof.

14. The fastening system (8), according to claim 13, **characterized in that** said polymeric matrix is preferably epoxy resin.

15. The fastening system (8), according to claim 11, **characterized in that** the fibers of the reinforced composite are fibers selected from the group comprising glass, quartz, carbon, polyamide and mixtures thereof.

16. The fastening system (8), according to claim 15, **characterized in that** said fiber is preferably glass fiber or quartz.

17. The fastening system (8), according to claim 11, **characterized in that** the fastening element (20) comprises a flexural strength in the range of 300 to 1200 Mpa.

18. The fastening system (8), according to claims 10 to 17, **characterized in that** the fastening element (20) is fixable tangentially to the inner wall of the root canal (11) by means of chemical cements.

## Patentansprüche

1. Ein Befestigungssystem zum Einbringen in den Zahnkanal (8), umfassend:
- ein Befestigungselement (10) zum Einbringen in den Zahnkanal (11), das einen Körper mit paralleler oder konischer Form, eine parallele oder konische Längsdurchgangsbohrung (1) und einen Hauptlängsschlitz (2) umfasst, der vom oberen Ende zum unteren Ende des Körpers des Befestigungselements verläuft; und **dadurch gekennzeichnet, dass** das Befestigungssystem ferner
- - einen vorgefertigten Pin (9) umfasst,
wobei das Befestigungselement (10) mit seiner Durchgangsbohrung (1) um den vorgefertigten Pin (9) herum einsetzbar ist.

2. Das Befestigungssystem (8) nach dem Anspruch 1, **dadurch gekennzeichnet, dass** das Material des Befestigungselements (10) ein faserverstärkter Verbundwerkstoff ist, der eine Polymermatrix und in der Polymermatrix in einer Richtung oder in mehreren Richtungen verteilte Fasern umfasst.

3. Das Befestigungssystem (8) nach dem Anspruch 2, **dadurch gekennzeichnet, dass** der verstärkte Verbundwerkstoff einen Radioopazifikator und Pigmente umfasst, die in der Polymermatrix dispergiert sind, wobei der Radioopazifikator und die Pigmente aus der Gruppe ausgewählt sind, die Folgendes umfasst: Siliziumdioxid, Phosphat-Calciumoxid, Bariumsulfat, Aluminiumoxid, Zirkoniumdioxid, Zinnoxid, Tantaloxid, Nioboxid, Titanoxid, Poly(methacrylat) und Mischungen davon.

4. Das Befestigungssystem (8) nach dem Anspruch 2, **dadurch gekennzeichnet, dass** die Polymermatrix des verstärkten Verbundstoffs aus der Gruppe ausgewählt ist, die umfasst: Polyamide, Polyester, Polyolefine, Polyimide, Polyacrylate, Polyurethane, Vinylester, Materialien auf Epoxidbasis, wie Epoxidharz, Styrol, Styrolacrylnitril, ABS-Polymere, Polysulfone, Polyacetale, Polycarbonate, Polyphenylensulfide, Acrylmonomere, Methacrylmonomere und Mischungen davon.

5. Das Befestigungssystem (8) nach dem Anspruch 4, **dadurch gekennzeichnet, dass** die Polymermatrix vorzugsweise aus Epoxidharz besteht..

6. Das Befestigungssystem (8) nach dem Anspruch 2, **dadurch gekennzeichnet, dass** die Fasern des verstärkten Verbundes Fasern aus der Gruppe ausgewählt sind, die Glas, Quarz, Kohlenstoff, Polyamid und Mischungen davon umfasst..

7. Das Befestigungssystem (8) nach dem Anspruch 6, **dadurch gekennzeichnet, dass** die Faser vorzugsweise Glasfaser oder Quarz ist.

8. Das Befestigungssystem (8) nach dem Anspruch 1, **dadurch gekennzeichnet, dass** das Befestigungselement (10) eine Biegefestigkeit im Bereich von 300 bis 1200 MPa aufweist.

9. Das Befestigungssystem (8) nach einem der Ansprüche 1 bis 8, **dadurch gekennzeichnet, dass** das Befestigungselement (10) mittels chemischer Zemente tangential an der Innenwand des Wurzelkanals (11) fixierbar ist.

10. Ein Befestigungssystem zum Einbringen in den Zahnkanal (8), umfassend:
- ein Befestigungselement (20) zum Einbringen in den Zahnkanal (11), das einen Körper mit paralleler oder konischer Form, eine parallele oder sich verjüngende Längsdurchgangsbohrung (3), einen Hauptlängsschlitz (4) und Teillängsschlitze (5, 6) im oberen und/oder unteren Teil des Körpers des Befestigungselements (20) umfasst, wobei die Teillängsschlitze (5, 6) parallel zu dem Hauptlängsschlitz (4) sind und wobei die Teillängsschlitze (5, 6) ein Ende des Körpers des Befestigungselements teilweise vorstehen lassen, des Körpers des Befestigungselements teilweise seine Ausdehnung vorschieben; und **dadurch gekennzeichnet, dass** das Befestigungssystem ferner
- einen vorgefertigten Pin (9) umfasst,
wobei das Befestigungselement (20) mit seiner Durchgangsbohrung (3) um den vorgefertigten Pin (9) herum einführbar ist.

11. Das Befestigungssystem (8) nach dem Anspruch 10, **dadurch gekennzeichnet, dass** das Material des Befestigungselements (20) ein faserverstärkter Verbundwerkstoff ist, der eine Polymermatrix und in der Polymermatrix in einfacher oder multidirektionaler Richtung verteilte Fasern umfasst.

12. Das Befestigungssystem (8) nach dem Anspruch 11, **dadurch gekennzeichnet, dass** der verstärkte Verbundwerkstoff ein Strahlenschutzmittel und Pigmente umfasst, die in der Polymermatrix dispergiert sind, wobei das Strahlenschutzmittel und die Pigmente aus der Gruppe ausgewählt sind, die Folgendes umfasst: Siliziumdioxid, Phosphat-Calciumoxid, Bariumsulfat, Aluminiumoxid, Zirkoniumoxid, Zinnoxid, Tantaloxid, Nioboxid, Titanoxid, Poly(methacrylat) und Mischungen davon.

13. Das Befestigungssystem (8) nach dem Anspruch 11, **dadurch gekennzeichnet, dass** die Polymermatrix des verstärkten Verbundstoffs aus der Gruppe ausgewählt ist, die umfasst: Polyamide, Polyester, Polyolefine, Polyimide, Polyacrylate, Polyurethane, Vinylester, Materialien auf Epoxidbasis, wie Epoxidharz, Styrol, Styrol, Acrylnitril, ABS-Polymere, Polysulfone, Polyacetale, Polycarbonate, Polyphenylensulfide, Acrylmonomere, Methacrylmonomere und Mischungen davon.

14. Das Befestigungssystem (8) nach dem Anspruch 13, **dadurch gekennzeichnet, dass** die polymere Matrix vorzugsweise Epoxidharz ist.

15. Das Befestigungssystem (8) nach dem Anspruch 11, **dadurch gekennzeichnet, dass** die Fasern des verstärkten Verbundstoffes Fasern sind, die aus der Gruppe ausgewählt sind, die Glas, Quarz, Kohlenstoff, Polyamid und Mischungen davon umfasst.

16. Das Befestigungssystem (8) nach dem Anspruch 15, **dadurch gekennzeichnet, dass** die Faser vorzugsweise Glasfaser oder Quarz ist.

17. Das Befestigungssystem (8) nach dem Anspruch 11, **dadurch gekennzeichnet, dass** das Befestigungselement (20) eine Biegefestigkeit im Bereich von 300 bis 1200 Mpa aufweist.

18. Befestigungssystem (8) nach einem der Ansprüche 10 bis 17, **dadurch gekennzeichnet, dass** das Befestigungselement (20) mittels chemischer Zemente tangential an der Innenwand des Wurzelkanals (11) fixierbar ist.

## Revendications

1. Système de fixation pour introduction dans le canal dentaire (8), comprenant :
- un élément de fixation (10) pour introduction dans le canal dentaire (11) comprenant un corps de forme parallèle ou conique, un trou (1) parallèle ou longitudinal pointu et une fente principale longitudinale (2) s'étendant de l'extrémité supérieure à l'extrémité inférieure du corps de l'élément de fixation ; et **caractérisé en ce que** le système de fixation comprend en outre
- une broche préfabriquée (9),
dans lequel l'élément de fixation (10) avec son trou (1) est insérable autour de la broche préfabriquée (9).

2. Système de fixation (8), selon la revendication 1, **caractérisé en ce que** le matériau de l'élément de fixation (10) est un composite à fibre renforcée comprenant une matrice de polymère et des fibres dispersées dans la matrice de polymère dans la simple direction ou multidirectionnelle.

3. Système de fixation (8), selon la revendication 2, **caractérisé en ce que** ledit composite renforcé comprend un radioopacifiant et des pigments dispersés dans la matrice de polymère, le radio-opacifiant et les pigments étant choisis dans le groupe comprenant : de la silice, de l'oxyde de phosphate de calcium, du sulfate de baryum, de l'alumine, de l'oxyde de zirconium, de l'oxyde d'étain, de l'oxyde de tantale, de l'oxyde de niobium, de l'oxyde de titane, un poly(méthacrylate), et leurs mélanges.

4. Système de fixation (8), selon la revendication 2, **caractérisé en ce que** ladite matrice de polymère du composite renforcé est choisie dans le groupe comprenant les polyamides, les polyesters, les polyoléfines, les polyimides, les polyacrylates, les polyuréthanes, les esters de vinyle, les matériaux à base d'époxy, tels que la résine époxy, le styrène, l'acrylonitrile de styrène, les polymères ABS, les polysulfones, les polyacétals, les polycarbonates, les sulfures de polyphénylène, les monomères acryliques, les monomères méthacryliques, et leurs mélanges.

5. Système de fixation (8), selon la revendication 4, **caractérisé en ce que** ladite matrice de polymère est de préférence une résine époxy.

6. Système de fixation (8), selon la revendication 2, **caractérisé en ce que** les fibres du composite renforcé sont des fibres choisies dans le groupe comprenant du verre, du quartz, du carbone, un polyamide, et leurs mélanges.

7. Système d fixation (8), selon la revendication 6, **caractérisé en ce que** la fibre est de préférence une fibre de verre ou du quartz.

8. Système de fixation (8), selon la revendication 1, **caractérisé en ce que** l'élément de fixation (10) comprend une résistance à la flexion dans la plage de 300 à 1 200 MPa.

9. Système de fixation (8), selon les revendications 1 à 8, **caractérisé en ce que** l'élément de fixation (10) est fixable tangentiellement à la paroi interne du canal racinaire (11) au moyen de ciments chimiques.

10. Système de fixation pour introduction dans le canal dentaire (8), comprenant :
- un élément de fixation (20) pour introduction dans le canal dentaire (11) comprenant un corps de forme parallèle ou conique, un trou (3) parallèle ou longitudinal pointu, une fente principale longitudinale (4) et des fentes longitudinales partielles (5, 6) dans la partie supérieure et/ou inférieure du corps de l'élément de fixation (20), lesdites fentes longitudinales partielles (5, 6) étant parallèles avec ladite fente longitudinale principale (4) et les fentes longitudinales partielles (5, 6) laissant une extrémité du corps de l'élément de fixation avançant partiellement son extension ; et
**caractérisé en ce que** le système de fixation comprend en outre
- une broche préfabriquée (9),
dans lequel l'élément de fixation (20) avec son trou (3) est insérable autour de la broche préfabriquée (9).

11. Système de fixation (8), selon la revendication 10, **caractérisé en ce que** le matériau de l'élément de fixation (20) est un composite renforcé de fibres comprenant une matrice de polymère et des fibres dispersées dans la matrice de polymère dans la direction simple ou multidirectionnelle.

12. Système de fixation (8), selon la revendication 11, **caractérisé en ce que** ledit composite renforcé comprend un radio-opacifiant et des pigments dispersés dans la matrice de polymère le radio-opacifiant et les pigments étant choisis dans le groupe comprenant : de la silice, de l'oxyde de phosphate de calcium, du sulfate de baryum, de l'alumine, de l'oxyde de zirconium, de l'oxyde d'étain, de l'oxyde de tantale, de l'oxyde de niobium, de l'oxyde de titane, un poly (méthacrylate), et leurs mélanges.

13. Système de fixation (8), selon la revendication 11, **caractérisé en ce que** ladite matrice de polymère du composite renforcé est choisie dans le groupe comprenant les polyamides, les polyesters, les polyoléfines, les polyimides, les polyacrylates, les polyuréthanes, les esters de vinyle, les matériaux à base d'époxy, tels que la résine époxy, le styrène, le styrène, l'acrylonitrile, les polymères ABS, les polysulfones, les polyacétals, les polycarbonates, les sulfures de polyphénylène, les monomères acryliques, les monomères méthacryliques, et leurs mélanges.

14. Système de fixation, selon la revendication 13, **caractérisé en ce que** ladite matrice polymère est de préférence une résine époxy.

15. Système de fixation (8), selon la revendication 11, **caractérisé en ce que** les fibres du composite renforcé sont des fibres choisies dans le groupe comprenant du verre, du quartz, du carbone, un polyamide, et leurs mélanges.

16. Système de fixation (8), selon la revendication 15, **caractérisé en ce que** ladite fibre est de préférence une fibre de verre ou du quartz.

17. Système de fixation (8), selon la revendication 11, **caractérisé en ce que** l'élément de fixation (20) comprend une résistance à la flexion dans la plage de 300 à 1 200 MPa.

18. Système de fixation (8) selon les revendications 10 à 17, **caractérisé en ce que** l'élément de fixation (20) est fixable tangentiellement à la paroi interne du canal racinaire (11) au moyen de ciments chimiques.
